# EUROPEAN PATENT APPLICATION

(11) **EP 4 475 514 A1**
(43) Date of publication of application: **11.12.2024**
(21) Application number: 23178225.1
(22) Date of filing: 08.06.2023
(51) Int. Cl.: H04L 67/12, G01D 5/00

(54) **PREDICTIVE VIRTUAL SENSOR COMMISSIONING AND MANAGEMENT**

(71) Applicant: Koninklijke Philips N.V., 5656 AG Eindhoven (NL)
(72) Inventor: CRONIN, Harry Michael, Eindhoven (NL); WALKER, Nicholas Simon, Eindhoven (NL); MCDONALD, Rory Andrew Bruce, Eindhoven (NL); KAMPERMAN, Franciscus Lucas Antonius Johannes, Eindhoven (NL); GARCIA MORCHON, Oscar, Eindhoven (NL)
(74) Representative: Philips Intellectual Property & Standards

(57) **Abstract**

This invention describes an apparatus and methods that may run on a smart device such as a smart phone or a smart hub and that may be capable of commissioning and/or managing virtual sensors/actors by one or more of gathering requirements regarding virtual sensors/actors, determining virtual sensors or actors based on existing sensors/actors (e.g., by coordinating sensors/actors in one or more networks and/or by means of temporary sensors/actors and events of opportunity), determining parameter(s) of virtual sensors/actors given measurements of the existing sensors/actors, and exposing the virtual sensor/actor parameter(s).

## Description

### FIELD OF THE INVENTION

This invention relates to a commissioning and/or managing system which may be applied to sensors, actuators or other data-producing devices arranged in a local network (e.g., a home network or home automation system), a sensor network or an augmented/virtual reality (AR/VR) or metaverse application that may be connected by means of different wireless connectivity technologies including short and long range. Short range technologies may include IEEE 802.15.4 based networks, Wi-Fi networks, etc. The sensors may also be connected by means of, e.g., a 3GPP based network or a long-range (network such as LoRa.

### BACKGROUND OF THE INVENTION

Sensors are increasingly used in local networks such as home networks and home automation systems. They can measure temperature, light conditions, but also more personal data like, respiration rate, occupancy, identity, blood pressure (mobile sensor), and all kind of other medical data, movement patterns, etc.

Virtual sensors and actuators may be created, in which several real devices collaborate to sense or actuate one or more parameters of interest which may be of a different type than the type they were designed for. In many cases, the parameter in question may be beyond the capability of any one real device to sense or actuate. As an example, such virtual sensors or actuators may be used in the audio domain, e.g., virtual microphones or loudspeakers, but in principle any type of parameters could be relevant. Virtual sensors may also be used in industrial Internet of Things (IoT) applications which are adapted to predict/learn which physical sensors of a set of physical sensors could be adequately replaced with a virtual sensor composed of some sub-set of the remaining sensors.

To create a virtual sensor from a set of physical sensors, a physical sensor of a known type in a location of interest may need to be deployed, such that data from the remaining sensors can be compared to it. Known systems provide such a temporary or learning sensor by leveraging existing, already-installed permanent physical sensors and learning to emulate them using other sensors.

An optimum use of virtual sensors may often require processing their data through machine learning models. However, machine learning models trained in one scene (e.g., a scene containing physical sensors) may not natively work when the activity is transferred to a different scene (i.e., a scene where a new, virtual sensor is located). As an example, in typical IoT scenarios, data obtained from either real or virtual sensors may be subject to further processing, especially by machine learning approaches. The machine learning model may have been trained on data from one context or scene and may then wished to be used in a new context. In examples (e.g., for human activity recognition models operating on Wi-Fi data), transfer learning may be applied as a technique for transferring such learning models to a new scene by using only a few samples collected in the new scene.

It may not be intuitive for a user to deploy virtual sensors, because their potential capabilities depend on the properties of several different physical sensors as well as the installation environment. Known systems for learning potential virtual sensors typically require presence of physical sensors at locations of interest at least during a learning mode. However, this is not practical for smart home scenarios, and does not allow for extending a virtual sensor into regions not yet covered by physical sensors.

Furthermore, in case of a (re-)deployment of physical sensors to optimize deployment of virtual sensors, it may not be intuitive for a user to deploy/re-locate (existing) physical sensors in such a way that the highest amount of or best virtual sensors can be deployed fitting the needs of (third party) applications installed in a smart environment, e.g., a smart home.

While existing systems (e.g., calibration routines for loudspeaker arrays) may provide a way to test or manage a group of like physical devices which are forming part of a virtual sensor or actuator, they may not offer such a capability for heterogeneous devices, heterogeneous networks (e.g., Wi-Fi and Thread (802.15.4 based) or multiple Wi-Fi networks) or for devices which are required to operate in non-standard modes while forming part of the virtual sensor.

### SUMMARY OF THE INVENTION

It is an object of the present invention to provide a user-friendly system for creating potential virtual sensors within a sensor environment.

This object is achieved by an apparatus as claimed in claim 1, by a hub device as claimed in claim 12, by a mobile device as claimed in claim 13, by a system as claimed in claim 14, by a method as claimed in claim 15, and by a computer program product as claimed in claim 16.

According to a first aspect (e.g., directed to a controller of a hub device (hub) or a mobile device (e.g., smartphone)), an apparatus for discovering, commissioning or managing virtual data or action-producing devices (210) in a network is provided, which is configured to:
gather information which indicates at least one virtual data or action producing device;
determine the at least one virtual data or action-producing device based on the gathered information and information about existing data or action-producing devices;
determine at least one parameter of the determined at least one virtual data or action-producing device based on measurements of the existing data or action-producing devices; and
output the determined at least one parameter of the at least one virtual data or action-producing device.

According to a second aspect, a hub device (hub) of a network is provided, which comprises one or more physical data or action-producing devices and the apparatus of the first aspect.

According to a third aspect, a mobile device (e.g., smartphone) is provided, which comprises the apparatus of the first aspect.

According to a fourth aspect, a system for discovering, commissioning or managing virtual data or action-producing devices is provided, wherein the system comprises a network of one or more physical data or action-producing devices and the hub device of the second aspect.

According to a fifth aspect, a method for discovering, commissioning or managing virtual data-producing devices in a network is provided, wherein the method comprises the steps of
gathering information which indicates at least one virtual data or action-producing device; determining the at least one virtual data or action-producing device based on the gathered information and information about existing data or action-producing devices;
determining at least one parameter of the determined at least one virtual data or action-producing device based on measurements of the existing data or action-producing devices; and
outputting the determined at least one parameter of the at least one virtual data or action-producing device.

According to a sixth aspect, a computer program product is provided, which comprises code means for producing the steps of the method of the fifth aspect when run on a computer device.

Accordingly, the invention provides a system that can be used for virtual sensor/actor discovery, orchestration, commissioning, and management, in which virtual sensors (or other data-producing devices) or virtual actors (or other action-producing devices) can be 'discovered' in a pre-existing network of physical sensors or actors, without requiring deployment of any additional sensors or actors, by use of temporary ancillary sensors or existing physical sensors to sense co-identified events simultaneously to the network of physical sensors, and thereby act as a basis for emulation. Virtual sensors/actors can be orchestrated by a central hub, without requiring user input, by learning their orchestration requirements as part of the discovery process above and applying them at runtime.

Thereby, the act of a user commissioning a virtual sensor/actor can be enhanced so that it also improves the performance of that virtual sensor/actor or of a downstream model by design of a suitable gesture.

Virtual sensors/actors can be managed proactively by a hub without necessarily requiring user input, by using similar gestures to those above, or by re-running the sensor discovery process.

According to a first option that can be combined with any one of the first to sixth aspects, the at least one virtual data or action-producing device may be determined by coordinating existing data or action-producing devices in the network and/or other networks. Thus, existing devices of the network or other networks can be controlled (e.g., orchestrated) to obtain required information for determining the desired virtual device.

According to a second option that can be combined with the first option or any one of the first to sixth aspects, the coordinating may be achieved by time synchronization and/or frequency synchronization and/or light colour synchronization and/or beam forming. Thus, it can be ensured that the required information is obtained at the right location and the right time.

According to a third option that can be combined with the first or second option or any one of the first to sixth aspects, the information which indicates the at least one virtual data or action-producing device may be gathered by transmitting an information request to available ancillary devices and/or an information request to available physical data or action-producing devices. Thereby, suitable existing ancillary and/or physical devices of the network can be triggered to provide information required for determining the virtual device(s).

According to a fourth option that can be combined with any one of the first to third options or any one of the first to sixth aspects, ground truth information (obtained from e.g. ancillary device(s)) may be compared to information gathered from the existing data or action-producing devices and a virtual device model may be estimated, which determines the at least one parameter of the at least one virtual data or action-producing device. Thus, reliable ground truth information is advantageously used as a reference for estimating the virtual device model.

According to a fifth option that can be combined with any one of the first to fourth options or any one of the first to sixth aspects, the at least one virtual data or action-producing device may be determined by means of one or more temporary data or action-producing devices and events of opportunity. Thus, the determined virtual device can be adapted to a temporary device and events of opportunity to optimize the functionality of the virtual device.

According to a sixth option that can be combined with any one of the first to fifth options or any one of the first to sixth aspects, the events of opportunity may relate to movements or actions of users or other persons, and/or movements or actions of devices, for which ground truth sensing data is available. Thereby, reference movements or actions can be selected to optimize the functionality of the virtual device.

According to a seventh option that can be combined with any one of the first to fifth options or any one of the first to sixth aspects, the at least one virtual data or action-producing device may be emulated by a set of existing physical data or action-producing devices. Thus, the new virtual device can be provided by using output signals of already existing devices without requiring any additional network devices.

According to an eighth option that can be combined with any one of the first to fifth options or any one of the first to sixth aspects, a temporary external source of the ground truth sensing data may be provided by using and correlating available data streams which either originate from a data or action-producing device that is not part of a set of data or action-producing devices used to provide the at least one virtual data or action-producing device or originate from use of at least one data or action-producing device, that is part of the set of data or action-producing devices being used to provide the at least one virtual data or action-producing device, in a non-standard mode (e.g., a high-energy or high-sampling rate mode). Thereby, suitable information for optimizing the determination of the at least one parameter of the virtual device can be provided.

According to a ninth option that can be combined with any one of the first to fifth options or any one of the first to sixth aspects, a functionality of a virtual data or action-producing device may be enhanced or tested by designing at least one movement or action to be performed by a user and/or a device to add ground truth data. Thus, the functionality of the virtual device can be continuously adapted to changes in the network environment by providing updated ground truth data.

It shall be understood that the apparatus of claim 1, the hub device of claim 12, the mobile device of claim 13, the system of claim 14, the method of claim 15, and the computer program product of claim 16 may have similar and/or identical embodiments, in particular, as defined in the dependent claims.

It shall be understood that a preferred embodiment can also be any combination of the dependent claims or above embodiments with the respective independent claim.

These and other aspects will be apparent from and elucidated with reference to the embodiments described hereinafter.

### BRIEF DESCRIPTION OF THE DRAWINGS

In the following drawings:
Fig. 1 schematically shows a block diagram of a sensor discovery, commissioning and management system according to various embodiments;
Fig. 2 schematically shows a process flow diagram based on the system of Fig. 1;
Fig. 3 schematically shows a flow diagram of a virtual sensor discovery process according to a first embodiment;
Fig. 4 schematically shows a flow diagram of a virtual sensor commissioning process according to a second embodiment;
Fig. 5 schematically shows a flow diagram of a virtual sensor management process according to a third embodiment; and
Fig. 6 schematically shows an example of a virtual sensor commissioning process in an exemplary sensor environment.

### DETAILED DESCRIPTION OF EMBODIMENTS

Embodiments are now described based on sensor network systems. Such systems may be home networking system, sensor systems for metaverse applications or commercial, industrial or public spaces (for example, hospitals). Such networks may use long-range (e.g. cellular) communications technologies or shorter-range such as Wi-Fi, UWB, Bluetooth^{™} and the like.

The following description is described in terms of a networked arrangement, but it should be noted that the same operations can be applied within a single device.

Throughout the following disclosure, a "home network" or "sensor network" is understood as a network comprising sensors and actuators facilitating certain tasks (e.g., lighting or healthcare related). It may include a home network hub (e.g., data distribution entity) in charge of managing the home network and allowing multiple devices or nodes (e.g., sensors and actors) to connect to a device to participate in the network. The home network hub may also be an entity in charge of orchestrating secure data distribution, e.g., data originated in the network. The home network hub may include or provide access to a router device to link the home network to an external network (e.g., the Internet) and/or may allow adding or removing devices from the network.

A "sensor" or "sensor device" shall be understood as a data-producing device (e.g., in a home network) capable of (wireless) sensing, positioning, sensing, e.g., light, presence, sound, images, etc.

Furthermore, a "virtual sensor" or other "virtual device" is understood as a virtual entity that may be instantiated by means of a type of software that processes what a physical sensor or other device otherwise would. It learns to interpret the relationships between the different variables and observes readings from different instruments. Virtual sensing techniques are used to provide feasible and economical alternatives to costly or impractical physical measurement instrument. A virtual sensing system uses information available from other measurements and process parameters to calculate an estimate of the quantity of interest. These virtual devices may use data to gather information that would not be measurable by a single device. This way they may attain information that cannot be measured directly.

Furthermore, a "user" or "homeowner" is understood as referring to a person owning the home network, and in most cases, owning the data collected/gathered/produced by sensors/actuators of the home network.

In addition, the term "metaverse" is understood as referring to a persistent shared set of interactable spaces, within which users may interact with one another alongside mutually perceived virtual features (i.e., augmented reality (AR)) or where those spaces are entirely composed of virtual features (i.e., virtual reality (VR)). VR and AR may generally be referred to as "mixed reality" (MR).

Further, the term "data" is understood as referring to a representation according to a known or agreed format of information to be stored, transferred or otherwise processed. The information may particularly comprise one or more channels of audio, video, image, haptic, motion or other form of information or environmental/personal characteristics (e.g., temperature, heart rate, etc.), that may be synchronized and may be derived from sensors (e.g., microphones, cameras, motion detectors, etc.).

Further, the term "events of opportunity" shall be understood as referring to events for which the location of the event is known and for which a source of ground truth sensing data exists. A first example includes a movement performed by a user (such as walking in a defined location), wherein that movement can be sensed by a particular device (such as a smartphone carried in the user's pocket) or a wireless receiver such as a Wi-Fi access point or a 3GPP access devices such as a 5G gNB. Another example includes a movement performed by a robot (e.g., drone, vacuum cleaner, assistant, ...) instructed to move in a predefined direction, wherein that movement can be measured and is known to the system. A further example includes a movement performed by a user/installer/robot during an installation phase carrying non-standard (e.g., high-quality) hardware/sensors.

The term "ground truth" shall be understood as information that is known to be real or true, provided by direct observation and measurement (i.e., empirical evidence) as opposed to information provided by inference. Thus, "ground truthing" refers to the process of gathering proper objective (provable) data. For example, a stereo vision system is tested to see how well it can estimate 3D positions. In this case, the "ground truth" may be the positions given by a laser rangefinder which is known to be much more accurate than the camera system.

Moreover, the term "gestures" shall be understood as relevant motions or actions carried out by a user or a device, which can be sensed by the sensor network. Examples include standing in, performing a physical gesture in, or walking to a particular location (for a user), and/or emitting a sound or performing a task at a particular location and time (for a device).

Over the past several years, the smart home market has grown significantly. In a market once dominated by tech-savvy early adopters, the World Economic Forum estimates that more than 130 million households owned a smart home device in 2022. Matter is a smart home standard created by Project Connected Home Over IP (Project Chip) in 2019. It was officially launched in November 2022 and is maintained by the Connectivity Standards Alliance (CSA), formerly known as the Zigbee Alliance. The standard encourages interoperability between devices and platforms. It allows devices to work offline without requiring continuous access to the cloud and various cloud services.

As a result, services may be offered to the owner using certain sensor data in such a way that an owner can better control which device and/or entity in/outside the home is accessing the data generated by other device(s). Such services may include health monitoring, presence detection, lighting control, heating, ventilation, air condition (HVAC) control, etc. It may also be envisaged that certain devices may perform certain actions based on data inputs from other devices, without having actual access to the data. In may also be envisaged that data generated in the home of the owner may be analysed/processed in a cloud where it may be desirable if the cloud does not have access to the data. It may also be envisaged that certain devices may only have access to the data if their attributes or context allow for it. In these situations, the access control architecture may not be sufficient.

Moreover, data (e.g., derived from measurements) may be presented to users or applications in an aggregated/processed manner. For instance, if in a room there are multiple light sensors, a user might not be interested in knowing the light readings (intensity, color, etc.) of each of the light sensors, but the aggregated light values in the room (e.g., average light intensity). For instance, given some physical sensors/actuators, it might be feasible to create virtual sensors/actuators, e.g., a virtual actuator is formed by multiple actuators or a virtual sensor is one that provides a sensing output based on the measurements of one or more physical sensors.

The following embodiments are directed to a system for discovering, commissioning and/or managing potential virtual sensors which can be created within an environment, their potential properties, and any co-ordination or orchestration requirements, wherein the system may include one or multiple underlying sensor networks. A learning or temporal sensor may be provided in a temporary manner, using other sensors which are known or likely to be available, without placing a burden on the users.

It should be noted that throughout the present disclosure only those blocks, components and/or devices that are relevant for the proposed data distribution function are shown in the accompanying drawings. Other blocks have been omitted for reasons of brevity. Furthermore, blocks designated by same reference numbers are intended to have the same or at least a similar function, so that their function is not described again later.

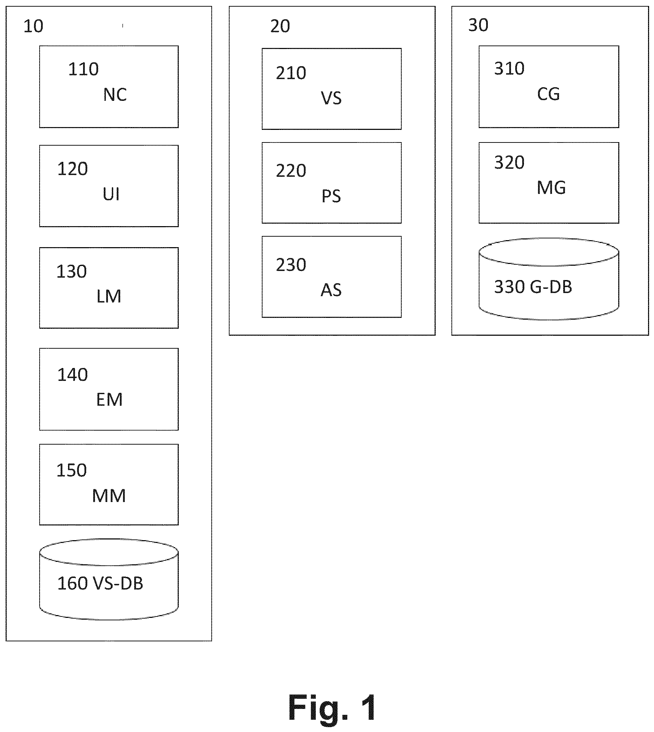

Fig. 1 schematically shows a block diagram of a sensor discovery, commission-ing and management system (which may be called "sensor learning system") according to various embodiments.

The system comprises one or more sensor networks 20 including one or more (in examples, two or more) sensors installed in a given space (such as a user's home network (e.g., smart home)). The sensors may be physical (i.e., hardware-based) sensors (PS) 220 including any type of hardware that can perform one or more sensing function. The sensing function may be a main-purpose function of the physical sensor 220 (e.g., a microphone which is installed to sense sounds) or a derived function obtained by using physical sensor hardware installed for one or more purposes to sense something in its environment (e.g., using wireless sensing from a Wi-Fi/3GPP communications device to sense movements of nearby people).

The physical sensors may further comprise suitable network hardware for establishing communications with a hub 10 (e.g., via Wi-Fi, Thread, Bluetooth, etc.) or access device.

Optionally, additional ancillary sensors (AS) 230 may be provided, which may be available at some times but not others. Examples of such ancillary sensors include a user's smartphone or similar device which is not a permanently installed part of the sensor network 20, and/or a physical sensor in a non-standard mode (such as a high-energy sensing mode, a high sampling rate mode, or a mode requiring high computational load), which would be prohibitively costly to operate continuously as part of a standard operation of the sensing Network 20, and/or non-standard hardware (e.g., a high-quality sensor as used in professional installation tools), and/or a sensor integrated in mobile devices (e.g., robots).

Furthermore, the sensor network 20 may comprise one or more virtual sensors (VS) 210 which may have been created e.g. based on a logical description of additional sensing data that can be derived by fusion of the output of a plurality of physical sensors 220 and that would not usually be available when considering the output of any single physical sensor 220.

In embodiments, the physical sensors 220 may have particular modes or behaviours which are required when being used as part of a virtual sensor 210, so that an orchestration function is required. For example, the physical sensors 220 may be required to cease network communications while operating as part of the virtual sensor 210.

In embodiments, the plurality of physical sensors 220 may comprise only one physical sensor but may use two or more different sensing functions (for example, using both audio and Wi-Fi sensing from a single smart speaker to constitute a virtual sensor).

In other embodiments, the plurality of physical sensors 220 may comprise multiple physical sensors in different networks (e.g., Wi-Fi or Thread) or systems (e.g., two nearby smart home systems).

It should be noted that the system of Fig. 1 may also comprise physical, ancillary, and virtual actuators ("action-producing devices") as previously noted with the same or similar characteristics as defined above, wherein "sensing data" would need to be replaced with "actuated output" in the case of actuators. In this context, an actuator is understood to be a device that produces an action as the actuated output in response to a received electrical signal. The actions could be mechanical (e.g. linear or rotary motion) or an emission of something (e.g. light or heat). Thus, a corresponding actuator network does not detect but instead generates actions. Accordingly, the teaching of the below embodiments can be transferred to such an actuator network.

The hub 10 may be a central device of an Internet of Things (IoT) or smart system for controlling devices on the sensor network(s) 20 and receiving their data such as Wi-Fi access point or a 3GPP access device. In example, the system may use multiple networks, such in a Matter system. The hub 10 may for example be implemented on a controller and/or a bridge and/or a border router as defined in the Matter standard, or otherwise. The hub 10 may be distributed over multiple devices. At least a part of the hub logic may be provided in an edge server or in a cloud and may be made available locally via one or more local units of the hub 10. It is also possible that the hub 10, or part of the functionality thereof, reside in a sensor/action-producing device or be distributed amongst a plurality of such devices.

More specifically, the Hub 10 may contain one or more of a computing unit, a network controller (NC) 110, a user interface (UI) 120, a location module (LM) 130, an event module (EM) 140, a measurement model (MM) 150, and a virtual sensor database (VS-DB) 160.

The network controller 110 may be a hardware module configured to manage network communications with the sensors (e.g., Wi-Fi, Thread, Bluetooth, 3GPP Radio Access Network, etc.). It should be understood that the network controller 110 may have sub-components, some of which may be concerned with functions other than simple control of the network. It may control the network/sensing/acting functions of the physical sensors 220 (e.g., control at least one of transmission of data, communication time, movement of robot devices to certain locations, usage of certain sensing capabilities/parameters/modalities, synchronization of sensing of multiple devices, synchronization of sensing inputs of multiple devices, usage of a given frequency, etc.), synchronization of multiple networks (e.g., Wi-Fi, Thread) so that they do not interfere with each other, e.g., when Wi-Fi is used for sensing, the Thread network should not be used for communication so that the Wi-Fi sensing measurements are as accurate and noiseless as feasible. Furthermore, the network controller 110 may be configured to receive sensing data from the physical sensors 220 and the ancillary sensors 230.

The user interface 120 may be provided directly at the hub 10 or may be located at a remote place and connected with the hub 10 via (local/cloud) communications with an external device such as a user's smartphone.

The location module 130 may be a first software module configured to maintain and update an approximate map of a space in which the hub 10 and the sensor network 20 are installed (such as a user's smart home).

In an example, the space of a smart home may be retrieved from the Internet where multiple sites maintain information about existing properties. In another example, the space of a smart home may be learned (e.g., by scanning and/or data retrieval) by means of (robot) devices. In a still further example, the location (e.g., of home objects) may be learned by means of a camera or other image processing device. In a still further example, ancillary objects may be placed to track specific (home) objects.

The event module 140 may be a second software module configured to calculate when an event of opportunity may have been detected by the sensor network 20.

The one or more measurement models 150 may be configured models to obtain (e.g., receive or retrieved) sensing data from the sensing network 20 and to derive meaning or context. Examples would include machine learning models (e.g., neural networks) which receive sensing data relating to human activity and derive information about the status or wellbeing of the related person in question. These may be run locally on the hub 10 or accessed remotely from a cloud service.

The virtual sensor database 160 may be configured to store parameters needed to derive a virtual sensor 210 from data of the physical sensors 220, alongside their relevant operating modes, approximate location, and co-ordination and/or orchestration requirements.

In an embodiment, virtual sensors may be kept if the hub 10 changes (e.g., due to a change of the hub provider) based on the data stored in the virtual sensor database 160, provided that a data export is enabled by a corresponding function of the hub 10. The virtual sensors may be exposed to application programs i.e. such programs may be able to access/receive output it produces.Thereby, smart home systems may be run by different providers. Each of the providers may use a different hub 10 (e.g., through a generic smart speaker or dedicated hardware) to enable a smart home functionality. When a user decides to switch smart home providers, the virtual sensors used by a user and stored in the virtual sensor database 160 can be moved as well. As an example, this may be achieved by including (e.g., in the virtual sensor database 160) a list of virtual sensors and for each virtual sensor an information about how the virtual sensor is structured.

Furthermore, the system of Fig. 1 comprises a gesture design system 30 for designing (in the following, designing also includes exchanging) gestures, which may be configured to run on the hub 10 or remotely.

The gesture design system may comprise at least one of a commissioning gesture module (CG) 310 for designing commissioning gestures, a managing gesture module (MD) 320 for designing managing gestures, and a gesture database (G-GB) 330 for storing commission and management gestures.

The commissioning gesture module 310 may be configured to design gestures that may be used by a user to commission a virtual sensor 210, while at the same time improving its performance. Such commissioning gestures may be used by a (robot) device to commission the virtual sensor 210, wherein the (robot) device may be steered by the hub 10 or an external party. The commissioning gestures may be linked to the events of opportunity and/or the measurement models 150 associated with the commissioned virtual sensor 210.

The management gesture module 320 is configured to design gestures that may be used to manage or test the virtual sensor(s) 210. These may be the same as the commissioning gestures or may be specially designed for ease of input or likelihood of naturally occurring to act as a continuous virtual sensor testing function.

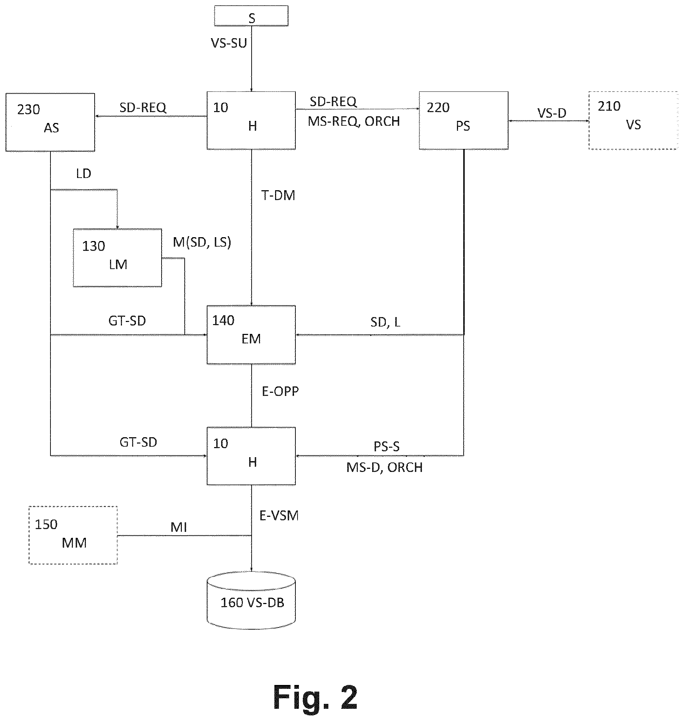

Fig. 2 schematically shows a flow diagram of a sensor discovery process based on the system of Fig. 1.

After start (S) of the procedure, a user indicates a requirement for a virtual sensor setup to the hub 10. In response, the hub initiates a discovery mode and transmits or broadcasts or multicasts a sensing data request (SD-REQ) to available ancillary sensor(s) 230 and a sensing data request together with a mode switch request (MS-REQ) and orchestration control information (ORCH) to available physical sensors 220.

Furthermore, the hub 10 provides information (T-DM) about a timing of the discovery mode to the event module 140.

The physical sensors 220 may obtain/receive optional virtual sensing data (VS-D) from virtual sensor(s) 210.

The ancillary sensor(s) may transmit/forward location data (LD)to the location module 130 which generates matched sensing data and location streams (M(SD, LS) and forwards them to the event module 140. Additionally, the event module 140 and the hub 10 receive ground truth sensing data (GT-SD) from the ancillary sensor(s) 230.

Moreover, the physical sensors 220 may transmit sensing data (SD) and a location provision (L) to the event module 140 and the hub 10 receives information about physical sensor sensing (PS-S) and orchestration (ORCH) and mode switch data (MS-D) from the physical sensors 220.

Based on at least one of the ground truth sensing data, the timing of the discovery mode and the sensing data and location provision, the event module 140 determines events of opportunity (E-OPP) and forwards information about such events of opportunity to the hub 10.

The hub 10 compares ground truth data to physical sensor data, estimates virtual sensor models and stores information about the estimated sensor models (E-VSM) in the virtual sensor database 160.

Optional additional modelling information (MI) may be provided from the available measurement models 150.

In embodiments, building a virtual sensor model may be based on training using stored time-aligned sensor data (e.g., from all sensors) which may be collected over a certain time period and stored in a data repository. In an example, the virtual sensor model may be trained to attempt to produce (as output) desired sensor data from the physical sensors data (as input). The virtual sensor model may be a convolutional or transformer-based neural network model trained e.g. with a mean square error (MSE) on the desired output, or it may be a very simple model such as a linear regression model.

The complexity of the implementation of the virtual sensor model can be adapted to the available computational situation, as a major part of the benefits of the proposed concept may be gained from a simple model even if it is not quite as good as a more complex model.

Edge Artificial Intelligence (Edge AI) is an implementation of artificial intelligence in an edge computing environment. That means AI computations can be done at the edge of a given network, usually on the device where the data is created, instead of in a centralized cloud computing facility or offsite data center. In view of the availability of Edge AI chips, training a relatively small neural network can be relatively quick and easy. This could be based on a continual online training process.

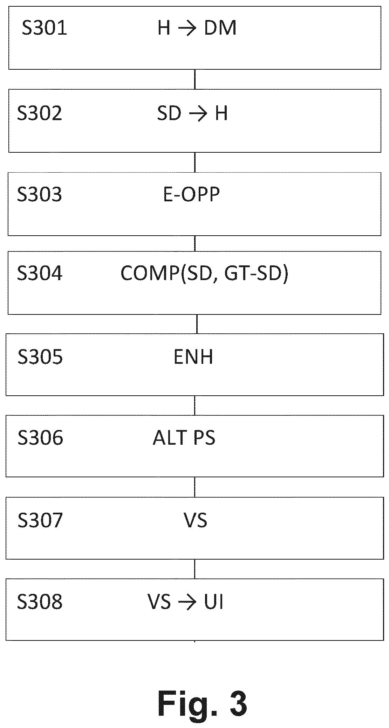

Figs. 3 to 5 schematically show respective flow diagrams of a virtual sensor discovery, commissioning and management processes according to various embodiments using components of the sensor discovery, commissioning and management system of Fig. 1. The steps of these flow diagrams may at least partly be performed or initiated by respective instructions of a software program/routine that controls a controller at the hub (e.g., the network controller 110 of Fig. 1) or a remote network device.

It should be noted that not all steps of Figs. 3 to 5 may always be required. Moreover, some or all steps may be performed once or multiple times and in different order.

More specifically, respective processes for virtual sensor discovery, commissioning, and management are described based on related first to third embodiments, wherein a common feature is the use of events of opportunity happening within a scene to enhance the ability of a hub to discover or manage the virtual sensors, or (in the commissioning embodiment) the use of specially designed events of opportunity as an 'output' (i.e., gesture) to enhance the performance of a virtual sensor at the moment of commissioning.

The three embodiments are thus directed to virtual sensor discovery and orchestration, virtual sensor commissioning, and virtual sensor management.

Fig. 3 schematically shows a flow diagram of a virtual sensor discovery process according to the first embodiment.

The virtual sensor discovery may comprise one or more of following steps shown in Fig. 3. The order may be different than shown and steps may be repeated.

In step S301 a user indicates his/her desire to discover potential virtual sensors in a system containing one or multiple physical sensors that may have been already commissioned to and managed by a hub (H) or this is communicated to the hub via a third party application, or the hub runs a program that proposes the creation of virtual sensors that may be beneficial to the user or one or more third party applications in usage in the system (e.g., applications running on the hub or on smart devices (e.g., smart phone) connected to the system), or a (user) application may trigger the discovery/creation of virtual sensors (for instance, a new IoT application may trigger a request to create virtual sensors that may be beneficial), or an operating system (OS, e.g., iOS or Android) may trigger the discovery/creation of virtual sensors to make them available to 3rd party apps.

In response, the hub enters a discovery mode (DM).

In an example, the user request may for example be a one-time input via the user interface requesting a virtual sensor in a specific location, or a persistent desire to discover potential virtual sensors in all or specific locations in a scene or a predetermined part of the scene. The user may or may not specify a desired type and location of the virtual sensor. Where the user does specify a desired location, the subset of physical sensors to be used may be restricted to those available at that location.

In an alternative example, the request for discovery may be initiated by a third-party application ("app"). For example, the user may access an "app store" or equivalent interface, in which either apps corresponding to virtual sensors can be downloaded, and/or the hub may be configured to provide sensing data from physical sensors abstracted into a particular type of virtual sensor for use by such a third-party apps. For example, a "smart home app store" may contain many third-party virtual sensor apps (these could be sensors of different types, such as "fall detection" and "voice control microphone" - or sensors of different performance levels, such as "basic microphone" and "sensitive microphone"). The virtual sensor apps may contain a (hidden) list of requirements of the hub to fulfil in order for each app to be installed. In this case, the installation of a new app by the user, or the request from an installed app for new abstracted sensing data, may constitute the request for the hub to discover appropriate virtual sensors.

In step S302, the hub has entered the discovery mode and requests and receives sensing data from all or some installed physical sensors, plus ancillary sensors (such as the user's smartphone) where available, e.g., via the network controller.

If necessary, the hub may be configured to instruct at least some of the physical sensors to enter a specific mode for the discovery phase. Examples may include a high sensitivity mode (for example, using a high sampling rate, using a higher input energy for active sensing (such as some types of radio frequency (RF) sensing), and/or transmission of raw sensing data rather than locally processed data to the hub (which might be a standard mode of operation)), or a scanning mode (e.g., performing a type of beamforming, e.g., for wireless sensing to keep track of /sense certain areas or inject audio in and/or listen to certain areas), or non-standard modes (e.g., use of a physical sensor whose primary task is not sensing to temporarily provide a sensing input - for example, sensing events using the network hardware of a device (such as a smart lightbulb) which otherwise has no sensing function (e.g., a lightbulb including a Bluetooth interface might be able to sense the presence of a specific person carrying his phone (and running Bluetooth), or a lightbulb capable of Wi-Fi sensing may be enables to sense the presence of a person acting as a presence sensor), or causing temporary unusual outputs (for example, temporarily matching output properties of a smart light to that required by a nearby camera to enhance its sensing)).

In another example, the hub may provide enhanced co-ordination/orchestration to the physical sensors during the discovery phase (and where this increases performance, it can be replicated in the use phase).

According to a first example, the hub may orchestrate between communications and sensing tasks. For example, to avoid interference between the wireless communications from a nearby device and RF sensing data of the physical sensors making up the virtual sensor. Such orchestration may occur between the physical sensors themselves and/or between the physical sensors and other devices outside the sensor network. Further, such orchestration could occur across different wireless protocols (e.g., between Wi-Fi and IEEE 802.15.4), and/or between different networks implementing the same protocol (e.g., between two nearby Wi-Fi networks, to which the hub is registered or otherwise has access), and/or between adjacent smart home systems by coordinating adjacent hubs.

In a further example, some forms of RF sensing may require input from nearby devices' communications. For example, one method of human activity recognition using Wi-Fi may use one device to generate traffic from an access point (AP) and a second to sense channel state information (CSI) using the returned signals from the AP. In such an example, the hub may orchestrate (e.g., by transmitting orchestration control information) one or more physical sensors to sense CSI, while another device (which may be within or outside the sensor network) may generate known traffic from the AP.

According to a second example, the hub may orchestrate between sensing and energy management tasks. For example, it may be configured (e.g., by transmitting orchestration control information) to restrict the physical sensors from going into a low-power or sleep state while being used as part of the virtual sensor (and consequently, also do so during the discovery phase).

According to a third example, the hub may orchestrate between sensing and sensing tasks. For example, to avoid one active sensor's sensing-related emissions from interfering with the sensing of a nearby passive sensor, the hub may be configured (e.g., by transmitting orchestration control information) to command a first sensor to stop sensing during specific time periods or achieve a common time base with a second sensor to co-ordinate their sensing activity.

The above first to third examples may optionally apply also to ancillary sensors. In the case of ancillary sensors, an external party (e.g., installer) may control the usage of the ancillary sensors and/or the hub. Thus, the external party managing such ancillary sensors may also request and receive sensing data through the hub.

Any of the non-standard modes and orchestration details explained above may be stored in the virtual sensor database.

In step S303, the hub may be controlled to identify events of opportunity (E-OPP) which can be sensed by the installed physical sensors, for which the location of the event is known and/or for which a source of ground truth sensing data exists, using either the physical sensors or (where available) the ancillary or mobile sensors to construct a temporary physical sensor.

To achieve this, the hub may collect data from the physical sensors, e.g., cameras, and derive suggestions about potential virtual sensor locations or temporary sensor locations. For instance, a user may record a room with a camera in his phone, and objects of interest in the room (e.g., plants, table, door, window, ...) may be recorded as potential candidates for placement of a virtual sensors. For instance, a plant may benefit from a virtual sensor tracking whether it needs water, a table may benefit from a virtual sensor tracking whether people are sitting and there is enough light, a door may benefit from a virtual sensor tracking whether it is open/closed and people are in the house or not. The hub may then derive and provide suggestions about the location of these potential virtual sensors or temporal physical sensors.

The hub may only provide suggestions that are relevant to the user, e.g., given the set of third-party applications installed in the user's smart phone.

In step S304, the hub compares (COMP) the sensing data (SD) recorded by the physical sensors during the discovery period to the ground truth sensing data (GT-SD) at the location of interest and so identifies which subset of the physical sensors can best emulate the ground truth data from the temporary physical sensor or the potential virtual sensor. More specifically, the event module of the hub may compare the sensing data from the physical sensors with the (ground truth) sensing data of the ancillary sensors (and/or other physical sensors) to attempt to identify events of opportunity (i.e., those events which can be sensed by the installed physical sensors, for which the location of the event is known, and for which a source of ground truth sensing data exists.

In an example, the location of the events of opportunity may be derived e.g. by the location module by one or more of the following:
i. Sensing events within the entire area of interest (e.g., the whole space of a home network), while a source of user location exists (e.g., from an ancillary sensor such as the user's smartphone), and correlating the sensing data with unknown location (i.e., from the physical sensors) to the sensing data with known location (e.g., from the smartphone) by means of their similar sensing types of signals at (close to) the same time.
ii. Sensing events at a specific location (e.g., where the user requests a virtual sensor at a known location). In this case the location module may filter the sensing data from the physical sensors and any ancillary sensor(s) according to a location estimate (e.g., from a pre-existing map).
iii. Instructing the user to place an ancillary sensor (such as his/her smartphone) at a specific location.
iv. Instructing the user to place an ancillary object at a given location, for instance an RF or optical reflective surface (such as a metamaterial) on an object (e.g., door, window) that triggers the reflection of RF or optical signals or changes RF or optical propagation when the object moves, or a QR code that may be used by the smart home system and/or hub to determine a location/area/home object to be sensed, so that, e.g., beamforming can be trained/performed towards the area. For instance, the QR code may be attached to a plant that needs to be monitored by a camera so that the camera is aware of the plant. This way it is possible to create a virtual plant monitoring sensor to give indications about when a plant needs to be watered.

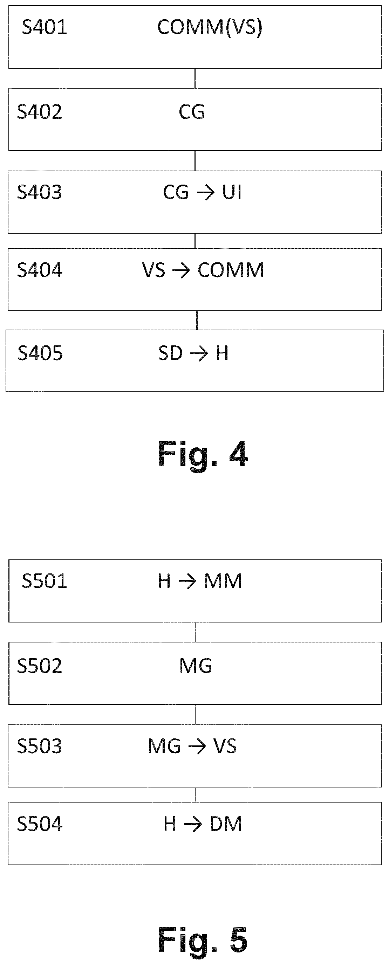

In another example, events of opportunity may be identified by one or more of linked data from the ancillary sensors and/or objects where these are known to be well correlated to the event type (for example, a smartphone would be well correlated to the event type of `user walking'), potential virtual sensor locations suggested to the user, linked data from several physical sensors appearing to have similar features, and specific events may be actively output to the user in the form of gestures (as described later in connection with the second embodiment of Fig. 4).

In a further example, the ground-truth sensing data may be derived by using ancillary sensors, ancillary objects (that might be provided or placed in the target environment), and/or nearby physical sensors in a non-standard mode temporarily (as explained above e.g. in connection with step S302), and resultant sensing data which best correlate to the event of opportunity may be derived.

In a still further example, the events may originate from a device or from a user.

In a still further example, the ground-truth sensing data may be matched to the location data during the time of the events of opportunity, e.g., before the process proceeds to step S304.

Where the emulation may be enhanced (ENH) by coordination between the physical sensors, and/or use of non-standard modes of operation, this may also be calculated by the hub in step S305.

In step S306, the hub may optionally further identify alternative subsets (ALT PS) of physical sensors which can emulate the temporary physical sensor to a lesser (but still useful) degree of precision.

In an example, the hub may compare the data recorded by the physical sensors (e.g., when acting in their "standard" mode), to the ground truth sensing data relating to the events of opportunity. The hub may identify (for example, using the technique of reference 1) which sub-set of the physical sensors can best emulate the ground truth data coming from the ancillary sensor or temporarily non-standard physical sensor(s) and/or make use of ancillary objects.

Note that if the emulation does not achieve a given threshold, the hub may also provide indications to (re)place the existing physical sensors (e.g., the hub may give a suggestion about an alternative location where a sensor, e.g., speaker or presence/light sensor can be placed) and/or place ancillary objects.

The goal of step S306 is to identify a sub-set of physical sensors which can best emulate the ground truth data (i.e., that of the ancillary sensor or temporary physical sensors) during the time of the event of opportunity, when operating in a known mode (preferably, in their standard mode of operation, but optionally a non-standard mode). This may require the hub to physically operate the physical sensors in several modes during the discovery phase (i.e., their standard mode and any relevant non-standard modes) and compare the difference in the fidelity of the emulation. As part of this, the hub may attempt to provide additional orchestration to the physical sensors where that might increase the fidelity of the emulation, and measure whether this did in fact improve the emulation. Any such orchestration details may be stored in the virtual sensor database.

In a further example, the hub may use a machine-learning approach, e.g., that of reference 1, to identify the subset(s) of physical sensors that best approximated the ground truth sensing data during the event of opportunity.

Optionally, a score that indicates how closely a subset of physical sensors emulates the ground truth data may be applied to rank that subset's estimated performance. The hub may then identify several different subsets and their estimated performance. As a further option, the subsets may be assigned weights and/or other factors relating to necessary transforms which should be applied to their physical sensor's sensing data when emulating the events of opportunity.

In step S307, properties and location of the temporary physical sensor or potential virtual sensor are stored in a database (e.g., the virtual sensor database), matched to the subset(s) of physical sensors required to emulate it, their operating mode(s) and any co-ordination requirements. This mapping may then constitute a newly discovered virtual sensor.

In an example, one or more of the physical sensor subset(s), the relevant type and location of the events of opportunity which they can emulate, the estimated fidelity, and any orchestration details may be stored in the virtual sensor database.

This stored information can then be used by the hub to operate the virtual sensor during future use, e.g., by applying the relevant operation and orchestration modes, alongside the relevant weights, to the identified subset of physical sensors.

In step S308, the hub may present its discovered virtual sensor(s) and their estimated performance to the user via a user interface (UI) (e.g., the user interface 120 of Fig. 1), who may select to commission the virtual sensor in the desired (given) location. In an example, the hub may presents the virtual sensor location, type and estimated performance to the user.

In an example, the hub may hide any physical sensor and offer virtual sensors only.

The commissioning of a virtual sensor (i.e., giving it privileges in the network relevant to its type and usage) may be achieved by any standard means (for example, established commissioning procedures within applicable smart home environments), or by the commissioning process described below with reference to Fig. 4.

According to an implementation example, a user may wish to extend his smart home with an alarm system and to this end, the user may install an alarm actuator. Instead of adding (movement) sensors to doors/windows, virtual sensors are suggested to the user by the system together with locations where these virtual sensors are to be attached to the doors/windows. The virtual sensors may be configured to determine whether, e.g., a door, is open/closed by means of wireless sensing, e.g., by using RF sensing from the multiple devices in the smart home, and/or by camera or other video devices. In the discovery of the virtual sensor at the door, the user may be requested to close/open the door and/or initiate another action that causes a change in the RF propagation, and thus, allows determining whether and which door or window is open/closed. If the RF propagation change is not enough, the user may be requested to attach e.g., an RF reflective material, e.g., transparent sticker to the door or window.

Fig. 4 schematically shows a flow diagram of a virtual sensor commissioning process according to the second embodiment.

The above process of the first embodiment described with reference to Fig. 3 is designed to, among others, discover potential virtual sensors or temporary (learning) sensors and their performance.

However, virtual sensor performance may not yet be optimum, if the events of opportunity used during the discovery phase were not well identified, and/or not well matched to typical events which the virtual sensor is expected to sense.

Therefore, an additional commissioning process is described to use the moment of sensor commissioning as an additional event of opportunity, which can be smartly designed by the hub and used to attempt to improve the virtual sensor's performance. The commissioning process may involve one or several of the following steps which may be repeated and/or performed in different order.

In step S401, a user indicates his/her desire to commission (COMM(VS)) a virtual sensor via the user interface and agrees to use, e.g., gesture-based commissioning. The hub retrieves its relevant virtual sensor models from a database (e.g., the virtual sensor database).

In step S402, in response to the user's indication, the hub accesses the gesture design system to design a commissioning gesture (CG) to be performed by the user, wherein the gesture may relate to a type or class of event which was not well contained in the observed events of opportunity and/or not well modelled by existing sensor data models, and can therefore be expected to add value to the performance of the virtual sensor.

More specifically, the gesture design system may design one or several commissioning gestures based on several factors which may include the following cases:
According to a first case, the design gestures may relate to a type or class of event which was not well contained in the observed events of opportunity during sensor discovery, or which otherwise had noisy or incomplete ground truth sensing data. In this case, the gesture may be designed to cause the user to provide such an input, so that data from the virtual sensor during a known time period around providing the prompt via the user interface can be associated to that action with high certainty (e.g., a certainty above a predefined threshold). As an example, a virtual sensor may have been discovered, which senses walking motion in a particular location, but the events of opportunity during sensor discovery only contained few samples of a user walking slowly. A suitable commissioning gesture would be to guide the user via the user interface to go to the relevant location and walk slowly.

According to a second case, the design gestures may relate to actions or events that cannot be directly sensed by either physical or virtual sensors, but instead rely on data processing using a selected measurement model. In this case, the commissioning gesture may be designed to act as an additional input to the measurement model which enhances its ability to be transferred to the new scene (as, for example, in reference 2). Furthermore, in this case, the commissioning gesture may consist of a representative example of the event of interest, which the user is guided to perform in the new 'scene' (i.e. the location where the virtual sensor is expected to sense). An example of this case may include a virtual sensor which is being commissioned to enable Wi-Fi sensing-based gesture control of smart lights in a new room, using a pre-existing gesture detection model (measurement model) which has been trained on data captured in other rooms. The commissioning gesture designed here may be the same as the intended on/off gesture used for the lights in the existing rooms, but performed in the new scene.

In either of the above first and second cases, the commissioning gestures may instead be designed to be carried out by a trusted device (i.e., an already-commissioned device) rather than the user.

In step S403, the user may be guided by a user interface (UI) of the hub to perform the gesture if he/she wish to commission the virtual sensor. His/her action is sensed during this time both by the virtual sensor and (if available) any ancillary sensor(s).

In an example, the designed commissioning gesture is communicated to the user via the user interface of the hub (or the trusted device via the network controller) and the user may choose to perform it.

The virtual sensor (and optionally, ancillary sensor(s)) are used to sense the action of the user or device completing the commissioning gesture. Sensing data from a short time period after the prompt is given to the user via the user interface may be labelled as most highly likely to relate to the prompted event.

The obtained sensing data may then be used as ground truth sensing data of an event of opportunity and compared to the sensing data of each of the physical sensors individually. The virtual sensor emulation calculation process of the above first embodiment of Fig. 3 may then be re-run on this new event of opportunity. This comparison may require the hub to alternate between using the physical sensors to emulate the virtual sensor (with its previously learned weights, settings, and orchestration requirements) and use each physical sensor individually, during the period of the user performing the commissioning gesture. This alternation can be carried out rapidly in time to 'sample' the same event with both sets of sensors.

Where the comparison results in a different optimum subset of physical sensors than that which was previously calculated (or different optimum weights or orchestration requirements), the hub may update its virtual sensor model in the virtual sensor database.

In the case that the commissioning gesture has been used for downstream model enhancement, the model management function may be updated with the new training data and the model may be re-trained.

In step S404, where the action is sensed, the virtual sensor (VS) may be commissioned (COMM) (i.e., allowed to operate persistently within the network with appropriate privileges).

In step S405, the sensing data (SD) relating to the user performing the commissioning gesture may be stored and used by the hub (H) to enhance the virtual sensor's performance (which may include altering the subset or weighting of physical sensors in use, and/or transfer of training data relating to downstream models to the virtual sensor's context).

Where the user completes the gesture, the virtual sensor is commissioned, with the updated parameters/orchestration details obtained above. Where the user does not complete the commissioning gesture, or an expected commissioning gesture is not sensed with sufficient fidelity, the user may be prompted via the user interface to complete it again, or enabled to commission the virtual sensor (albeit with potentially reduced performance) in another way.

It should be noted that, instead of using a gesture, the user may also pick up (e.g., via a user interface of the hub) one of the suggested virtual sensor locations determined in the previous embodiment.

It is further noted that, instead of using a gesture, the user may also place a QR code or an ancillary object where he/she wishes to place the virtual sensor.

It is still further noted that that an external device may also drive the generation of commissioning gestures (or alternative approaches) and exchange that data with the hub.

In the above cases, steps S402 to S404 of the process of Fig. 5 are to be correspondingly adapted with respect to the retrieval of the commissioning gesture.

Fig. 5 schematically shows a flow diagram of a virtual sensor management process according to the third embodiment.

During the life of a virtual sensor, testing and/or management may be required to enhance its performance. This is especially true if physical sensors are, e.g., added to or removed from the sensor network or the location/orientation changes. As such, a process similar to the second embodiment is described below to identify or create events of opportunity for virtual sensor management. This management process may involve one or several of following steps which may be repeated and/or performed in different order.

In step S50 1, a user and/or the hub may indicate a requirement to manage or test an already-commissioned virtual sensor. To achieve this, the hub (H) may enter a management mode (MM).

In an example, the hub may identify a need for virtual sensor management (for example, because of the addition of a new physical sensor to the network, or removal of one already installed) or modification of the state. In response to this, it may enter the management mode. In examples, this identification process may involve a collection of information from the sensors and monitoring changes, and/or a collection of mutual measurements from the sensors to identify, e.g., a change in the position of one of them, and/or a collection of movement of sensors to identify a change in the position of one of them, and/or a collection of system events (new device available, device unreachable, etc.), and/or a capability exchange with the devices, e.g., capabilities that can be used to track movement of the device itself or other devices.

Then, the hub may access the gesture design system to design one or more management gestures (or any of the alternatives used in other embodiments). These management gestures may be provided to a user, or a device, and may be designed to optimally test the functioning of the virtual sensor. Note that this may also be a process driven by a third device that sends selected management gestures to the hub.

Where the management gestures are to be performed by a user, the management gestures may consist of an action or event most commonly or most reliably sensed by the virtual sensor. This enables a maximum chance of detection, even if the virtual sensor performance has been degraded by removal of a physical sensor.

Where the management gestures are to be performed by a device, the management gestures may consist of a list of outputs (conditioned on the feasibility of the target device to produce the output), locations and/or times at which the device should perform the management gesture.

In step S502, the user or a device may be instructed to perform the management gesture (MG) (which may be the same as a 'commissioning gesture') at a known time in a known location.

In an example, the management gesture(s) may be communicated to the user via a user interface or to a device via the network controller.

In step S503, the management gesture is sensed by the virtual sensor, and the sensing data is compared to that which would be expected when the virtual sensor functions correctly.

During the time period of the user/device performing the management gesture, the hub uses such events as events of opportunity, and compares its sensing data associated with them using the virtual sensor as currently commissioned and using each or some of the physical sensors individually (and where available ancillary sensors). Then, the hub may update its virtual sensor model as in the above second embodiment.

In an example, the hub may communicate to the user via the user interface that the virtual sensor has been updated.

In step S504, where no (or a poor) match is found, the system may re-enter the discovery mode to attempt to discover an improved subset of physical sensors and/or an improved operation mode for the existing subset of physical sensors to enhance the virtual sensor.

In an example, where removal of a physical sensor has resulted in a large drop in performance of a virtual sensor, the user may be warned via the user interface, and optionally may be guided as to which physical sensor may need to be re-installed to recover the virtual sensor if desired.

As an alternative to the above gesture-based management of the third embodiment, the hub may instead periodically re-run the virtual sensor discovery process of the first embodiment, using events of opportunity.

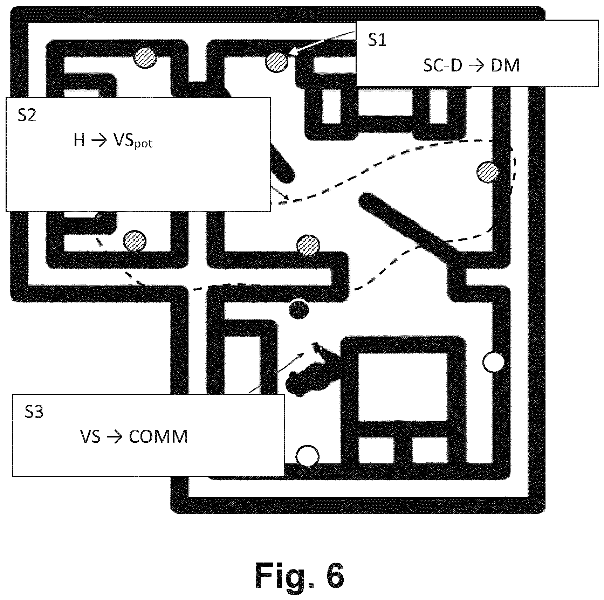

Fig. 6 schematically shows a top view of an example of a virtual sensor commissioning pro-cess in an exemplary sensor environment.

The bold black lines indicate walls of a building of the sensor environment (e.g., home network). The shaded dots indicate physical sensors and the solid dot indicates an identified potential virtual sensor.

In step S 1, a network of the physical sensors (hatched circular areas) senses data from a scene and may run a machine learning model. In step S2, a hub identifies a temporary sensor at a known location (e.g., user's smartphone) and uses this temporary sensor to predict a potential virtual sensor (black circular area), its location, and properties, and displays options to the user (e.g., via the display of the smartphone). To commission a virtual sensor, the user is guided in step S3 to perform some action (commissioning gesture) in its intended physical location, which most likely enhances model transfer to the new scene. The white circular areas may be ancillary sensors or non-registered physical sensors.

It should be noted that in the above embodiments, the applications for discovery, commissioning and/or management may specify one or more policies that specify requirements of real sensors to define specific types of virtual sensors. The hub may take this information into account next to the sensors deployed in the system and the map of the (smart) home to determine locations and give indications about the locations to the user.

Policies express how the behaviour of the system is governed. They express higher-level objectives that are automatically enforced. Predefined policies allow the system to dynamically adjust its behaviour without requiring user intervention at run-time. Numerous policy languages have been defined. As an example, the system may support the adaptable and programmable policy environment and language (APPEL) as policy language.

Policies may be programmed in a selected policy language or a policy wizard may be designed to allow non-computing users to create and edit policies. The wizard may be web-based, which allows policies to be defined anywhere using a familiar interface.

To summarize, apparatus/methods that may be provided on a smart device such as a smart phone or a smart hub have been described, that may be capable of commissioning and/or managing virtual sensors/actors by one or more of gathering requirements regarding virtual sensors/actors, determining virtual sensors/actors based on existing sensors/actors (e.g., by coordinating sensors/actors in one or more networks and/or by means of temporary sensors/actors and events of opportunity), determining parameter(s) of virtual sensors/actors given measurements of the existing sensors/actors, and exposing the virtual sensor/actors parameter(s).

Although the embodiments were described in the context of home networking and metaverse, their applications are not limited to such a type of operation. They may be applied to any device or network of devices in which multiple sensors are present and some correlation between sensor outputs can occur, such as applications for healthcare, stores, shopping malls, the sports club, etc. Therefore, they may apply to single, multisensory devices such as smartphones, as well as to IoT or 5G networks and the like.

Furthermore, at least some of the embodiments can be applied to various types of UEs or terminal devices, such as mobile phone, vital signs monitoring/telemetry devices, smartwatches, detectors, vehicles (for vehicle-to-vehicle (V2V) communication or more general vehicle-to-everything (V2X) communication), V2X devices, Internet of Things (IoT) hubs, IoT devices, including low-power medical sensors for health monitoring, medical (emergency) diagnosis and treatment devices, for hospital use or first-responder use, virtual reality (VR) headsets, etc.

Other variations to the disclosed embodiments can be understood and effected by those skilled in the art in practicing the claims, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. The foregoing description details certain embodiments. It will be appreciated, however, that no matter how detailed the foregoing appears in the text, these embodiments may be practiced in many ways, and is therefore not limited to the embodiments disclosed. It should be noted that the use of particular terminology when describing certain features or aspects should not be taken to imply that the terminology is being re-defined herein to be restricted to include any specific characteristics of the features or aspects with which that terminology is associated. Additionally, the expression "at least one of A, B, and C" is to be understood as disjunctive, i.e., as "A and/or B and/or C".

A single unit or device may fulfil the functions of several items recited in the claims. The mere fact that certain measures are recited in mutually different dependent claims does not indicate that a combination of these measures cannot be used to advantage.

The described operations like those indicated in the above embodiments (e.g., Figs. 3 to 5) may be implemented as program code means of a computer program and/or as dedicated hardware of the related network device or function, respectively (e.g., the network controller 110 of Fig. 1). The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

### References:

1. Ant Colony Inspired Machine Learning Algorithm for Identifying and Emulating Virtual Sensors", Mani et al, https://arxiv.org/pdf/2011.00836.pdf
2. Small CSI Samples-Based Activity Recognition: A Deep Learning Approach Using Multidimensional Features", Tian et al., 2021. https://www.hindawi.com/journals/scn/2021/5632298/

## Claims

1. An apparatus (32) for discovering, commissioning or managing virtual data or action-producing devices (210) in a network (20), wherein the apparatus (110) is configured to:
gather information which indicates at least one virtual data or action-producing device (210);
determine the at least one virtual data or action-producing device (210) based on the gathered information and information about existing data or action-producing devices (220, 230);
determine at least one parameter of the determined at least one virtual data or action-producing device (210) based on measurements of the existing data or action-producing devices (220, 230); and
output the determined at least one parameter of the at least one virtual data or action-producing device (210).

2. The apparatus of claim 1, wherein the apparatus (110) is configured to determine the at least one virtual data or action-producing device (210) by coordinating existing data or action-producing devices (220) in the network (20) and/or other networks.

3. The apparatus of claim 2, wherein the coordinating is achieved by time synchronization and/or beam forming.

4. The apparatus of any of the preceding claims, wherein the apparatus (110) is configured to gather the information which indicates the at least one virtual data or action-producing device (210) by transmitting an information request to available ancillary devices (230) and/or an information request to available physical data or action-producing devices (220).

5. The apparatus of any of the preceding claims, wherein the apparatus (110) is further configured to compare ground truth information to information gathered from the existing data or action-producing devices (220, 230) and to estimate a virtual device model which determines the at least one parameter of the at least one virtual data or action-producing device (210).

6. The apparatus of any of the preceding claims, wherein the apparatus (110) is configured to determine the at least one virtual data or action-producing device (210) by means of one or more temporary data or action-producing devices and events of opportunity.

7. The apparatus of claim 6, wherein the events of opportunity relate to movements or actions of users or other persons, and/or movements or actions of devices, for which ground truth sensing data is available.

8. The apparatus of claim 7, wherein the apparatus (110) is configured to emulate the at least one virtual data or action-producing device (210) by a set of existing physical data or action-producing devices (220).

9. The apparatus of claim 7 or 8, wherein the apparatus (110) is configured to provide a temporary external source of the ground truth sensing data by using and correlating available data streams which either originate from a data or action-producing device (230) that is not part of a set of data or action-producing devices (220) used to provide the at least one virtual data or action-producing device (210) or originate from use of at least one data or action-producing device (220), that is part of the set of data or action-producing devices (220) being used to provide the at least one virtual data or action-producing device (210), in a non-standard mode.

10. The apparatus of claim 9, wherein the non-standard mode is a high-energy or high-sampling rate mode.

11. The apparatus according to any of the preceding claims, wherein the apparatus (110) is configured to enhance or test a functionality of a virtual data or action-producing device (210) by designing at least one movement or action to be performed by a user and/or a device to add ground truth data.

12. A hub device (10) of a network (20) comprising one or more physical data or action-producing devices (220), said hub device comprising the apparatus of any of claims 1 to 11.

13. A mobile device comprising the apparatus of any of claims 1 to 11.

14. A system for discovering, commissioning or managing virtual data or action-producing devices (210), the system comprising a network (20) of one or more physical data or action-producing devices (220) and the hub device (10) of claim 12.

15. A method for discovering, commissioning or managing virtual data-producing devices (210) in a network (20), wherein the method comprises:
gathering information which indicates at least one virtual data or action-producing device (210);
determining the at least one virtual data or action-producing device (210) based on the gathered information and information about existing data or action-producing devices (220, 230);
determining at least one parameter of the determined at least one virtual data or action-producing device (210) based on measurements of the existing data or action-producing devices (220, 230); and
outputting the determined at least one parameter of the at least one virtual data or action-producing device (210).

16. A computer program product comprising code means for producing the steps of claim 15 when run on a computer device.
